Europäisches Patentamt

European Patent Office

Office européen des brevets

(11) Publication number: **0 368 460 B1**

# EUROPEAN PATENT SPECIFICATION

(45) Date of publication of patent specification: **03.08.94**  (51) Int. Cl.5: **H04N 1/41**, H04N 1/415

(21) Application number: **89309707.1**

(22) Date of filing: **25.09.89**

(54) **Coding apparatus.**

(30) Priority: **29.09.88 JP 245228/88**
**29.09.88 JP 245229/88**
**29.09.88 JP 245230/88**

(43) Date of publication of application:
**16.05.90 Bulletin 90/20**

(45) Publication of the grant of the patent:
**03.08.94 Bulletin 94/31**

(84) Designated Contracting States:
**DE FR GB NL**

(56) References cited:
EP-A- 0 142 767      EP-A- 0 310 021
US-A- 3 502 815      US-A- 4 701 807
US-A- 4 710 822      US-E- 32 291

(73) Proprietor: **SONY CORPORATION**
**7-35, Kitashinagawa 6-chome**
**Shinagawa-ku**
**Tokyo(JP)**

(72) Inventor: **Kondo, Tetsujiro**
**c/o Sony Corporation**
**7-35 Kitashinagawa 6-chome**
**Shinagawa-ku Tokyo(JP)**

(74) Representative: **Ayers, Martyn Lewis Stanley**
**et al**
**J.A. KEMP & CO.**
**14 South Square**
**Gray's Inn**
**London WC1R 5LX (GB)**

## Description

This invention relates to a highly efficient coding apparatus of image data for compressing and encoding the image data.

Various kinds of encoding systems have been proposed for reducing the number of bits of each pixel or picture element (sample) of the digitised image data by using the correlation of image signals. The specification of our Japanese patent laid open publication (JP,A) number 144989/1986 discloses highly efficient coding apparatus in which the dynamic range is derived as a difference between the maximum value and minimum value of a plurality of pixels included in a two-dimensional block and the encoding process is adapted to the dynamic range so established. On the other hand, in the specification of Japanese patent laid open publication (JP,A) number 92626/1987, there has been proposed a highly efficient coding apparatus in which encoding adapted to the dynamic range is executed with respect to a three-dimensional block which is formed by pixels in a plurality of areas each belonging to a plurality of frames. Further, as disclosed in the specification of Japanese patent laid open publication (JP,A) number 128621/1985, there has been proposed a variable length encoding method in which the number of bits changes in accordance with the dynamic range so that the maximum distortion which occurs upon digitisation becomes constant.

The above encoding methods adapted to the dynamic range (hereinafter, abbreviated to ADRCs) relate to highly efficient coding methods whereby the number of bits per pixel is reduced by using the fact that images have a strong correlation in a small area (block) which is obtained by dividing one picture plane. That is, the difference between the minimum or maximum value in the block and the level of each pixel becomes smaller than the original level and the difference can be digitised into a number of bits which is smaller than the number of original bits.

The present invention can be applied to the digitisation of the level which has been standardised by the minimum or maximum value in the foregoing ADRC processing. However, this invention is not limited to ADRC processing but can be also applied to a digitising circuit for expressing a digital image signal by a predetermined number of bits in a manner similar to ADRC processing.

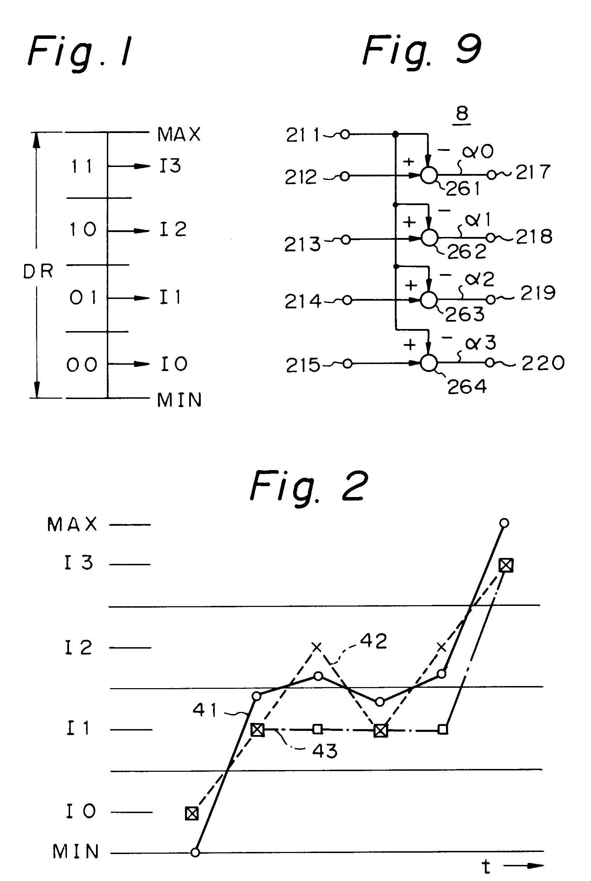

As shown in figure 1 of the accompanying drawings, in the ADRC for performing the digitisation of two bits, the dynamic range DR for a block as the difference between the maximum value MAX and minimum value MIN is uniformly divided into four level ranges and the value of the pixel from which the minimum value MIN was eliminated is expressed by the digitisation code of two bits respectively corresponding to the level ranges. On the decoding side, one of central decoding representative levels l0 to l3 in each level range is decoded from the dynamic range DR and the digitisation code, and the minimum value MIN is added to the decoded value, so that the pixel data in the block is reconstructed.

Figure 2 shows an example of the digitisation in the ADRC. Figure 2 shows an example of a one-dimensional ADRC in which one block is constructed by six pixels which are continuous in the horizontal direction. Data indicated by $\bigcirc$ denotes the true values of the pixels in the block. Therefore, the digitisation has a horizontal change indicated by a solid line 41. In the case where the encoding was executed by two-bit ADRC, reconstruction levels indicated by x are obtained on the decoding side and a change in signal shown by a broken line 42 occurs in the reconstructed image.

In the conventional digitisation technique, the level of the original pixel is substituted by the nearest decoding representative level in order to minimise the digitisation error and to improve the S/N ratio. However, there is a case where a visually conspicuous deterioration occurs in the reconstructed image even if the image is quantitatively good. In the example shown in figure 2, the original smooth horizontal change 41 results in the rough change 42 after the reconstruction. Visually conspicuous noises are generated in the reconstructed image. These noises are such that snow noises occurring in the television image received from a weak electric field are made fine and show up as the jitter-like noises. The occurrence of such a problem is based on the fact that when human beings recognise an image, they are sensitive to the differentiating characteristic of the image.

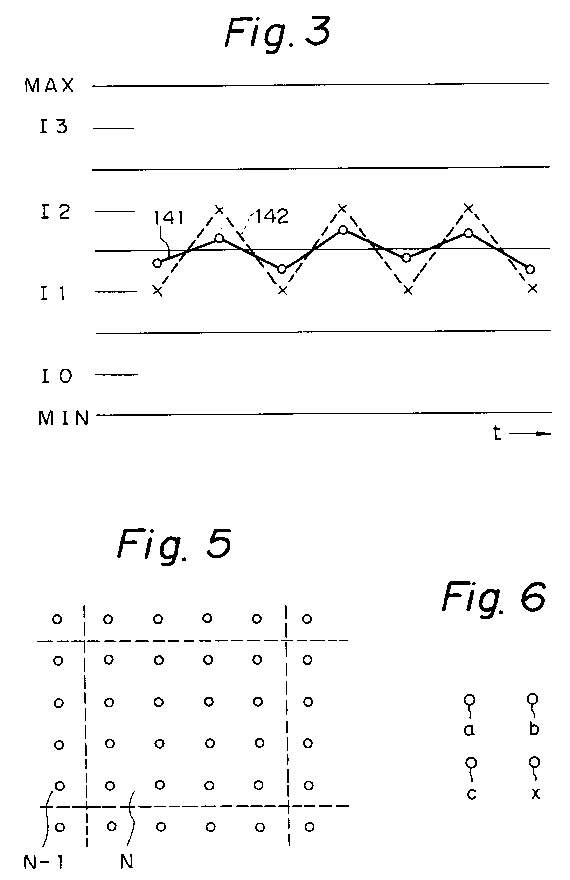

Figure 3 shows another example of the digitisation in the ADRC. Figure 3 shows a time change of pixels at the positions which respectively belong to six frames which are continuous in the time direction and spatially correspond to those frames. For simplicity, it is assumed that each block in which the six pixels are included has the equal maximum value MAX and the equal minimum value MIN. The data shown by $\bigcirc$ denotes the true values of the pixels. Therefore, there is a change in the time direction shown by a solid line 141. In the case where the encoding was executed by the ADRC of two bits, the reconstruction levels shown by x are obtained on the decoding side and a change in signal shown by a broken line 142 occurs in the reconstructed image.

In the example shown in figure 3, the original smooth change 141 in the time direction results in the rough change 142 after the reconstruction. The visually conspicuous noises are generated in the reconstructed image like an example shown in figure 2.

It is, therefore, an object of the present invention to provide a highly efficient coding apparatus which can preserve spatial change in the original image signal even if quantitative errors increase and visually improve the picture quality of the reconstructed image.

According to the invention, there is provided a coding apparatus for coding a plurality of digital, original data elements corresponding to respective picture elements and each comprising n bits, comprising an encoder for encoding said original data elements into respective compressed data elements, each compressed data element having a number of bits less than n, and a decoder for decoding said compressed data elements to one decoded value of a set of possible decoded values, wherein said encoder comprises:

- first difference determining means for determining a first difference between the value of a first original data element and the value of a second original data element which has already been encoded by said encoder and which corresponds to a picture element that is spatially adjacent to the picture element of said first original data element;
- second difference determining means for determining a first set of differences, each taken between the one of said set of possible decoded values and the decoded value of said second compressed data element;
- generating means for generating the first compressed data element such that if it were to be decoded then the decoded value provided from said set of possible decoded values would correspond to the difference from said first set of differences which is closest to said first difference.

The invention also provides a coding apparatus for coding a plurality of digital, original data elements corresponding to respective picture elements and each comprising n bits, comprising an encoder for encoding said original data elements into respective compressed data elements, each compressed data element having a number of bits less than n, and a decoder for decoding said compressed data elements to one decoded value of a set of possible decoded values, wherein said encoder comprises:

- first difference determining means for determining a first difference between the value of a first original data element and the value of a second original data element which has already been encoded by said encoder and which corresponds to a picture element that is time-adjacent and spatially identical to the picture element of said first original data element;

ment;

- second difference determining means for determining a first set of differences, each taken between the one of said set of possible decoded values and the decoded value of said second compressed data element;
- generating means for generating the first compressed data element where said first compressed data element is selected such that if said first compressed data element were to be decoded then the decoded value provided from said set of possible decoded values would correspond to the difference from said first set of differences which is closest to said first difference.

The invention further provides coding apparatus for coding a plurality of digital, original data elements corresponding to respective picture elements and each comprising n bits, comprising an encoder for encoding said original data elements into respective compressed data elements, each compressed data element having a number of bits less than n, and a decoder for decoding said compressed data elements to one decoded value of a set of possible decoded values, wherein said encoder comprises:

- first difference determining means for determining a first difference between the value of a first original data element and the value of a second original data element which has already been encoded by said encoder and which corresponds to a picture element that is spatially adjacent to the picture element of said first original data element;
- second difference determining means for determining a second difference between the value of said first original data element and a third original data element which has already been encoded by said encoder and which corresponds to a picture element which is time-adjacent and spatially identical to the picture element of said first original data element;
- third difference determining means for determining a first set of differences, each taken between the one of said set of possible decoded values and the decoded value of said second compressed data element;
- fourth difference determining means for determining a second set of differences between one of said set of possible decoded values and the decoded value of said third compressed data element;
- fifth difference determining means for determining a third set of differences each between one of said first set of differences and said first difference;

- sixth difference determining means for determining a fourth set of differences between one of said second set of differences of said second difference;
- seventh difference determining means for determining a fifth set of differences each between one of said set of possible decoded values and said value of said first original data element;
- weighting and adding means for multiplying first, second and third, predetermined weighting coefficients by each of the differences of said third, fourth and fifth sets of differences respectively and for adding together the multiplied differences from each of said third, fourth and fifth sets of differences which corresponds to the same decoded value from said set of possible decoded values to generate a set of added values;
- minimum determining means for determining which of said sets of added values is the smallest;
- generating means for generating the first compressed data element such that if it were to be decoded then the decoded value provided from said set of possible values would correspond to the smallest added value from said set of added values.

As will become apparent from the following description, the invention can provide a highly efficient coding apparatus which can preserve time dependent change in the original image signal and visually improve the picture quality of the reconstructed image and which is preferably adapted to the characteristics such as pattern, movement amount, and the like of an image and the picture quality of the reconstructed image is visually improved.

The invention will be further described by way of non-limitative example with reference to the accompanying drawings, in which:-

Figure 1 is a schematic diagram for use in explanation of a principle of a digitisation in ADRC;

Figures 2 and 3 are schematic diagrams for use in explanation of a characteristic of a conventional digitising circuit;

Figure 4 is a block diagram showing a first embodiment of the present invention;

Figures 5 and 6 are schematic diagrams for use in explanation of a first embodiment of the present invention;

Figure 7 is a block diagram showing a second embodiment of the present invention;

Figure 8 is a block diagram showing a third embodiment of the present invention; and

Figure 9 is a block diagram showing the details of a distortion detection circuit in the third embodiment of the resent invention shown in figure 8.

A first embodiment of the present invention will be described hereinbelow with reference to the drawings.

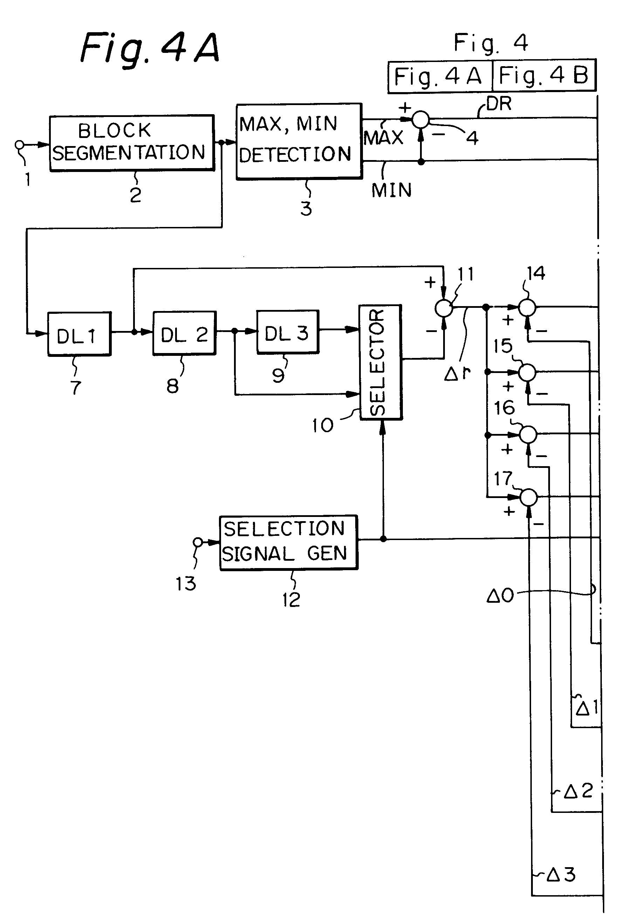

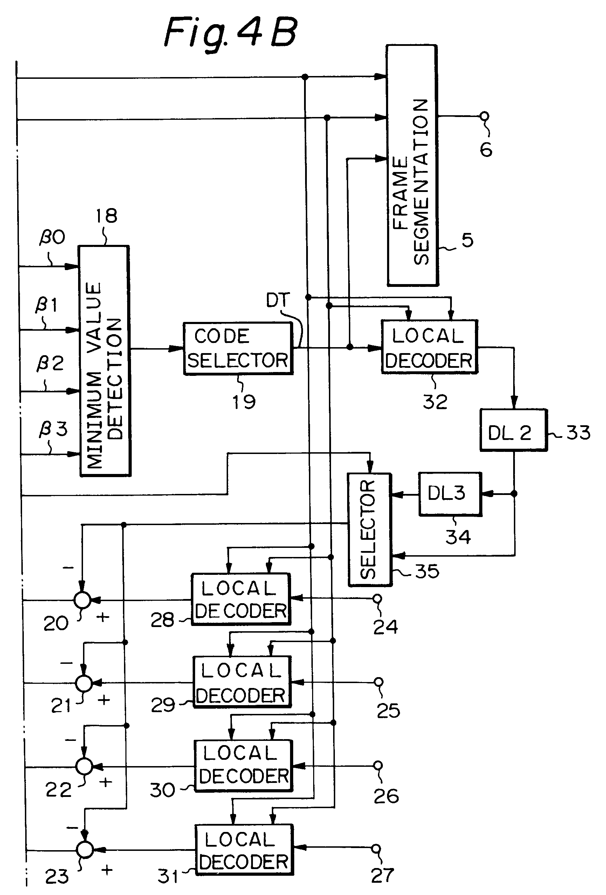

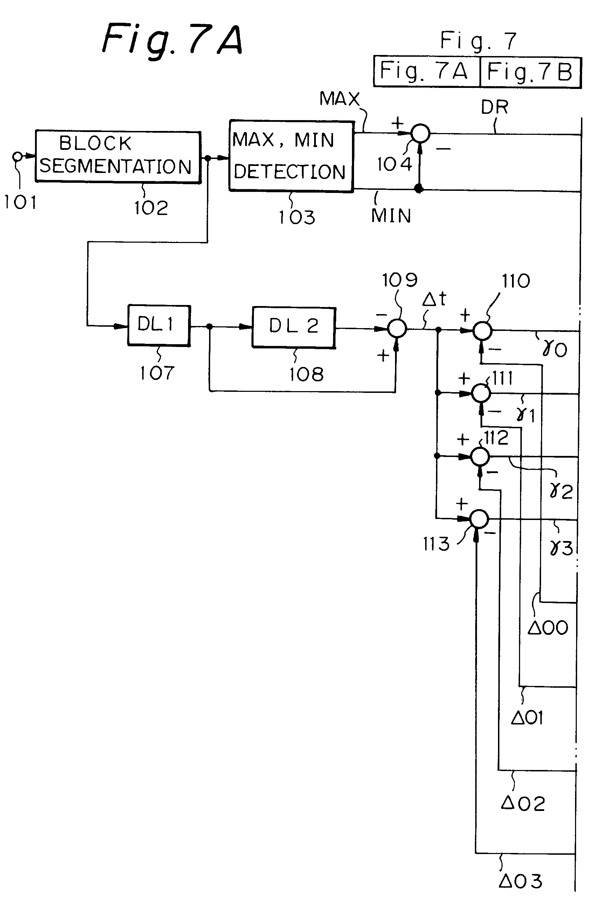

In figure 4, a digital video signal in which, for instance, one pixel (one sample) is digitised to eight bits is supplied to an input terminal shown by reference numeral 1. The order of the data of the input digital video signal is changed from the scanning order to the order of blocks by a block segmentation circuit 2. For instance, a picture plane of one frame is divided into small areas and (4 x 4 = 16 pixels) blocks are formed as shown in figure 5. In figure 5, N-1 denotes a preceding block and N indicates an objective block to be encoded. In the block, the data of the pixel at the top left-hand corner of the block N is first transmitted. The data of three pixels arranged in the horizontal direction within the block N are then transmitted. Similarly the data of the second, third and fourth rows within the block are serially transmitted.

An output signal of the block segmentation circuit 2 is supplied to a maximum value and minimum value detecting circuit 3. The maximum value MAX and the minimum value MIN of the pixels included in each blocks are detected, respectively. The maximum value MAX and the minimum value MIN are supplied to a subtracting circuit 4 and a dynamic range DR as a difference between them is calculated. The dynamic range DR and the minimum value MIN are supplied to a frame segmentation circuit 5. In the frame segmentation circuit 5, the dynamic range DR, the minimum value MIN, and a digitisation code DT, which will be explained hereinafter, are converted into a signal format of a frame construction and are subjected to an error correction encoding process (CRC, parity, etc) as necessary. Transmission data is obtained to an output terminal 6 of the frame segmentation circuit 5.

The output signal of the block segmentation circuit 2 is supplied to one of the input terminals of a selector 10 through delay circuits 7, 8 and 9. The output signal of the delay circuit 8 is supplied to the other input terminals of the selector 10. The output signal of the delay circuit 7 and the output signal of the selector 10 are supplied to a subtracting circuit 11, and the difference $\Delta r$ in the horizontal direction of the original pixel data (true value) is calculated. Assuming that the true value of the objective pixel is set to x1 and the true value of the pixel which is preceding by one sampling period is set to x0, then $\Delta r = x1 - x0$.

The delay amount DL1 of the delay circuit 7 corresponds to the time necessary to detect the maximum value and the minimum value. The delay amount DL2 of the delay circuit 8 corresponds to the interval in the horizontal direction between pixels, that is, one sampling period. Therefore, the difference $\Delta r$ in the horizontal direction between the data of the pixel which is preceding by one sample and the data of the objective pixel to be encoded is generated from the subtracting circuit 11.

In the case of the pixels of the left edge column in the block, since the data of the preceding pixel are not within the current block, it is necessary to form the difference by using the data of pixel at the right edge in the preceding block N-1. When the pixels at the left edge in the block is supplied to the subtracting circuit 11, the selector 10 selects the data of the pixel at the right edge in the preceding block from the delay circuit 9. A delay amount DL3 of the delay circuit 9 is set to (one block period - three sampling periods). The selector 10 is controlled by a selection signal from a selection signal generating circuit 12. Clock signals (a sampling clock and a block clock) from a terminal 13 are supplied to the selection signal generating circuit 12 and the selection signal to control the selector 10 as mentioned above is formed.

The difference $\Delta r$ between the true values of the image data from the subtracting circuit 11 is supplied to subtracting circuits 14, 15, 16 and 17. The output signals $\beta 0$, $\beta 1$, $\beta 2$ and $\beta 3$ of the subtracting circuits 14-17 are supplied to a minimum value detecting circuit 18 and the minimum output signal is detected. The detection signal of the minimum value detecting circuit 18 is supplied to a code selecting circuit 19 and the digitisation code DT of two bits is generated from the code selection circuit 19. The digitisation code DT is transmitted through the frame segmentation circuit 5. In the code selecting circuit 19, one of the two-bit digitisation codes (00), (01), (10) and (11) corresponding to the decoding representative levels I0, I1, I2 and I3 respectively is selected.

The selecting operation of the code selecting circuit 19 is as follows.

When $\beta 0$ is minimum, (00) is selected as the digitisation code DT.

When $\beta 1$ is minimum, (01) is selected as the digitisation code DT.

When $\beta 2$ is minimum, (10) is selected as the digitisation code DT.

When $\beta 3$ is minimum, (11) is selected as the digitisation code DT.

Signals $\Delta 0$, $\Delta 1$, $\Delta 2$ and $\Delta 3$ are supplied from subtracting circuits 20, 21, 22 and 23 to the subtracting circuits 14-17. The signals $\Delta 0$-$\Delta 3$ corresponding to the differences between the decoding level (X0) of the pixel preceding the objective pixel and the four decoding representative levels and indicate the predictive change amount respectively.

The subtracting circuits 14-17 and the minimum value detecting circuit 18 detect among the signals $\Delta 0$-$\Delta 3$, the one closest to the difference $\Delta r$ in the horizontal direction of the true value of the image data. In other words, the digitisation code DT corresponding to the decoding representative level which generates the change closest to the signal change in the horizontal direction of the original image signal is selected with respect to the objective pixel.

Decoding representative levels (MIN + I0), (MIN + I1), (MIN + I2) and (MIN + I3) formed by local decoders 28, 29, 30 and 31 are supplied to the subtracting circuits 20-23. In order to generate these decoding representative levels, the dynamic range DR and the minimum value MIN are supplied to the local decoders 28-31. Also, two-bit digitisation codes (00), (01), (10) and (11) are supplied from terminals 24, 25, 26 and 27, respectively. The local decoders 28-31 and 32 comprise ROMs to which the dynamic range DR and digitisation code DT are supplied as addresses. The minimum value MIN is added to the data read out of the ROMs, which thus act as look-up tables.

The decoding level X0 of the pixel preceding the objective pixel is formed by the local decoder 32, delay circuits 33, 34 and 35, and a selector 35. A digitisation code DT from the code selecting circuit 19 is supplied to the local decoder 32. A decoding level of the objective pixel is generated from the local decoder 32. The decoding level is supplied to one input terminal of the selector 35 through the delay circuit 33 having the delay amount DL2 of one sampling period. An output signal of the delay circuit 33 is supplied to the outer input terminal of the selector 35 through the delay circuit 34 having the delay amount DL3 of (one block period - three sampling periods). The selector 35 is controlled by the selection signal from the selection signal generating circuit 12 in a manner similar to the foregoing selector 10.

The delay circuits 33 and 34 and selector 35 generate the decoding level X0 of the preceding pixel x0 of the objective pixel x1 in a manner similar to the foregoing delay circuits 8 and 9 and selector 10. The decoding level is supplied to the subtracting circuits 20-23. Therefore, the signals $\Delta 0$ to $\Delta 3$ which are respectively generated from the subtracting circuits 20-23 correspond to the predictive differences between the four decoding representative levels and the decoding level X0 of the preceding pixel as will be shown below.

$$\Delta 0 = (I0 + MIN) - X0$$
$$\Delta 1 = (I1 + MIN) - X0$$
$$\Delta 2 = (I2 + MIN) - X0$$
$$\Delta 3 = (I3 + MIN) - X0$$

In the subtracting circuits 14-17, the following output signals are formed.

$$\beta 0 = \Delta r - \Delta 0$$
$$\beta 1 = \Delta r - \Delta 1$$
$$\beta 2 = \Delta r - \Delta 2$$
$$\beta 3 = \Delta r - \Delta 3$$

Since the minimum one of $\beta 0$-$\beta 3$ is detected by the minimum value detecting circuit 18, the digitisation code of which the predictive change amount is closest to the true value of the change amount $\Delta r$ is selected by the code selecting circuit 19.

It is also effective to execute the digitisation in such a manner as to accurately express two-dimensional changes in the horizontal direction, vertical direction, oblique direction and the like without limiting to the differences in the horizontal direction in the above embodiment. For instance, as shown in figure 6, in the case where the level of the objective pixel is x and the levels of the peripheral pixels at the upper position, left position and the upper oblique position are respectively a, b and c, the change amount $\Delta r$ of the true value of the objective pixel and the predictive change amounts $\Delta i$ (i = 0, 1, 2, 3) are obtained as the differences between the average values of the levels of the peripheral pixels and the level of the objective pixel. That is,

$$\Delta r = (3x - a - b - c)$$
$$\Delta i = (3li - A - B - C)$$

where, A, B and C denote levels which are obtained by decoding the digitisation codes derived with respect to a, b and c respectively. The digitisation code signal generating $\Delta i$ which is closest to $\Delta r$ is selected.

To obtain the change amount in the space, the predictive value obtained by the spatial prediction can be also used without limiting to the average value. That is, assuming that a predictive value is x′,

$$x' = b + 1/2 (c - a)$$
$$\Delta r = x - x' = x - b - 1/2(c - a)$$
$$\Delta i = li - B - 1/2 (C - A)$$

In a manner similar to the above, the digitisation code signal generating $\Delta i$ which is closest to $\Delta r$ is selected.

Furthermore, the present invention can be applied to a digitising circuit in other highly efficient coding such as ADRC of a variable length, ADRC of a three-dimensional block, etc.

When the first embodiment is applied to an image signal having a change shown by a solid line 41 as in figure 2, the data of the respective pixels are digitised to have the decoding representative value shown by □, and therefore the change of the reconstructed image results in a smooth change similarly to the original signal as shown by a broken line 43. In the manner, according to the first embodiment, the spatial change of the original image signal can be preserved, so that the generation of the visually conspicuous noises in the reconstructed image can be prevented.

Now, a second embodiment of the present invention will be described with reference to the drawings.

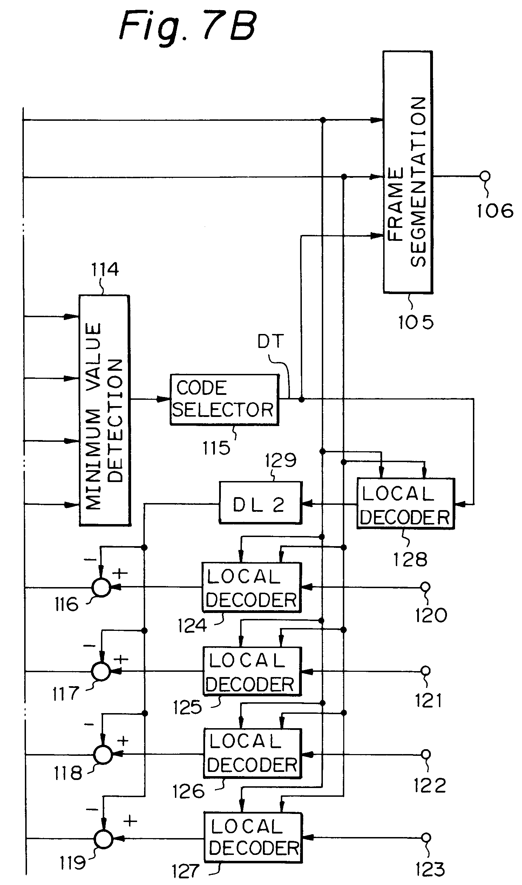

In figure 7, a digital video signal in which, for instance, one pixel (one sample) is digitised into eight bits is supplied to an input terminal shown by reference numeral 101. The order of the data of the input digital video signal is changed from the scanning order to the order of blocks by a block segmentation circuit 2. Since the maximum value and minimum value detecting circuit 103, subtracting circuit 104 and frame segmentation circuit 105 having output terminal 106 have the same construction as the circuits 3, 4 and 5 in figure 4, the detailed description of those is omitted for simplicity.

The output signal of the block segmentation circuit 102 is supplied to one of the input terminals of a subtracting circuit 109 through delay circuits 107 and 108. The delay amount DL1 of the delay circuit 107 corresponds to the time necessary to detect the maximum and minimum value. The output signal of the delay circuit 107 is supplied to the other input terminal of the subtracting circuit 109. A difference $\Delta t$ in the time direction of the original pixel data (true value) is calculated. Assuming that a true value of the objective pixel is set to x1 and a true value of a reference pixel which is preceding by one frame period is set to x10, then $\Delta t = x1 - x10$.

The difference $\Delta t$ between the true values of the image data from the subtracting circuit 109 is supplied to subtracting circuits 110, 111, 112 and 113. The output signals r0, r1, r2 and r3 of the subtracting circuits 110-113 are supplied to a minimum value detecting circuit 114 and the minimum output signal is detected. The detection signal of the minimum value detecting circuit 114 is supplied to a code selecting circuit 115 and a two-bit digitisation code DT is generated from the code selecting circuit 115. The digitisation code DT is transmitted through the frame segmentation circuit 105. In the code selecting circuit 115, one of the two-bit digitisation codes (00), (01), (10) and (11) corresponding to the decoding representative levels l0, l1, l2 and l3 is selected.

The selecting operation of the code selecting circuit 115 is as follows.

When r0 is minimum, (00) is selected as the digitisation code DT.

When r1 is minimum, (01) is selected as the digitisation code DT.

When r2 is minimum, (10) is selected as the digitisation code DT.

When r3 is minimum, (11) is selected as the digitisation code DT.

Signals $\Delta00$, $\Delta01$, $\Delta02$ and $\Delta03$ are supplied from subtracting circuits 116, 117, 118 and 119 to the subtracting circuits 110-113. The signals $\Delta00$-$\Delta03$ corresponding to the differences between the decoding level (X10) of the reference pixel and the four decoding representative levels and indicate the predictive change amount respectively. The subtracting circuits 110-113 and the minimum value detecting circuit 114 detect among the signals $\Delta00$-$\Delta03$, the one closest to the difference $\Delta t$ in the time direction of the true value of the image data. In other words, a digitisation code DT corresponding to the decoding representative level which generates the change closest to the signal change in one frame period of the original image signal is selected with respect to the objective pixel.

To the subtracting circuits 116-119, decoding representative levels (MIN + I0), (MIN + I1), (MIN + I2) and (MIN + I3) formed by the local decoders 124, 125, 126 and 127 are supplied. In order to generate these decoding representative levels the dynamic range DR and the minimum value MIN are supplied to the local decoders 124-127. Also, two-bit digitisation codes (00), (01), (10) and (11) are supplied from terminals 120, 121, 122 and 123, respectively. The local decoders 124-127 and 128 comprise ROMs to which the dynamic range DR and digitisation code DT are supplied as addresses. The minimum value MIN is added to the data read out of the ROMs.

The decoding level X10 of the reference pixel is formed by a local decoder 128 and a delay circuits 129 having the delay amount DL2 of one frame period. The digitisation data DT from the code selecting circuit 115 is supplied to a local decoder 128. A decoding level of the objective pixel is generated from the local decoder 128. By passing the decoding level through a delay circuit 129, the decoding level x10 of the reference pixel is obtained.

The decoding level is supplied to the subtracting circuits 116-119. Therefore, the signals $\Delta00$ to $\Delta03$ which are respectively generated from the subtracting circuits 116-119 correspond to the predictive difference between the four decoding representative levels and the decoding level X10 of the preceding pixel as will be shown below.

$$\Delta00 = (I0 + MIN) - X10$$

$$\Delta01 = (I1 + MIN) - X10$$
$$\Delta02 = (I2 + MIN) - X10$$
$$\Delta03 = (I3 + MIN) - X10$$

In the subtracting circuits 110-113, the following output signals are formed.

$$r0 = \Delta t - \Delta00$$
$$r1 = \Delta t - \Delta01$$
$$r2 = \Delta t - \Delta02$$
$$r3 = \Delta t - \Delta03$$

Since the minimum one of r0-r3 is detected by the minimum value detecting circuit 114, the digitisation code of which the predictive change amount is closest to the true value of the change amount $\Delta t$ of the true value is selected by the code selecting circuit 115.

According to the second embodiment, time dependent change of the original image signal can be preserved so that the generation of the visually conspicuous noises in the reconstructed image can be prevented.

However, according to the first embodiment in which the spatial signal change can be preserved, the generation of the noises in the time direction cannot be prevented. On the other hand, according to the second embodiment in which the time dependent signal change can be preserved, the generation of the spatial noses cannot be prevented. Moreover, the digitising system in which such signal changes are significant has a problem such that errors are accumulated.

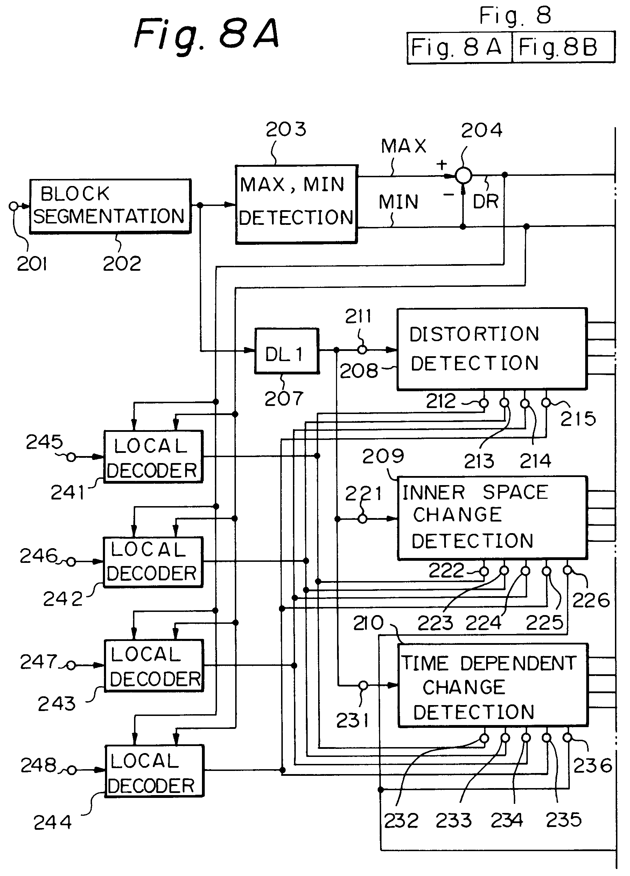

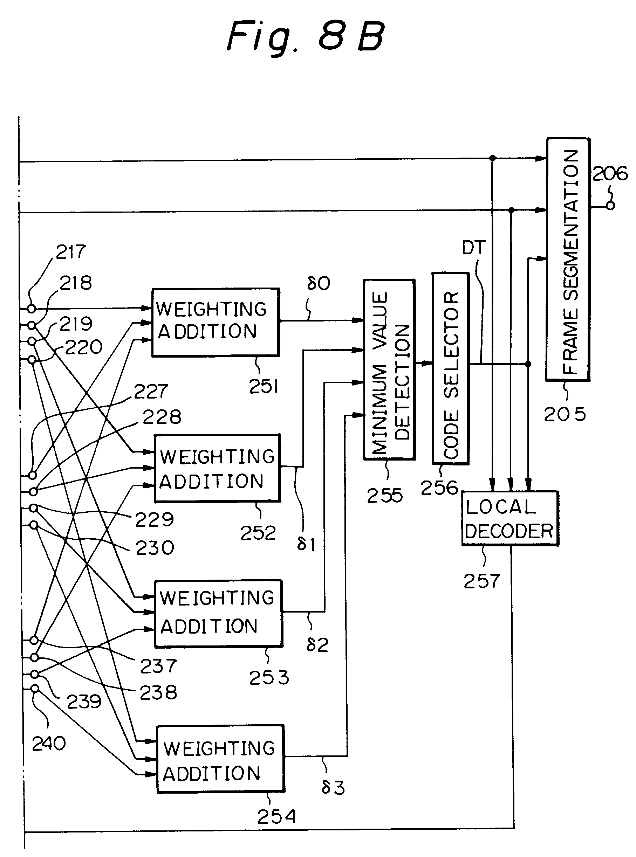

Therefore, in the third embodiment, a highly efficient coding apparatus which can be adapted preferably to the characteristics such as pattern, movement amount of a picture, and the like of an image and which can improve the picture quality of the reconstructed image visually will be described hereinbelow with reference to figure 8.

In figure 8, a digital video signal in which, for instance, one pixel (one sample) is digitised into eight bits is supplied to an input terminal shown by reference numeral 201. The order of the data of the input digital video signal is changed from the scanning order to the order of blocks by a block segmentation circuit 202.

Since the circuits 203, 204 and 206 have the same construction as the circuits 3, 4 and 5 in figure 4, the detailed description of those is omitted.

The output signal of the block segmentation circuit 202 is supplied to input terminals 211, 221 and 231 of a distortion detecting circuit 208, an inner space change detecting circuit 209, and a time dependent change detecting circuit 210 through a delay circuit 207. The delay amount DL1 of the delay circuit 207 corresponds to the time necessary to detect the maximum and minimum values.

The distortion detecting circuit 208 is the first arithmetic operating circuit for respectively arithmetically operating differences $\alpha 0$, $\alpha 1$, $\alpha 2$ and $\alpha 3$ between a true value x1 of the objective pixel and four decoding representative values corresponding to the number of bits. The decoding representative values are formed by local decoders 241, 242, 243 and 244. Digitisation codes (00), (01), (10) and (11) each consisting of two bits are supplied from terminals 245, 246, 247 and 248 to the local decoders 241 to 244, respectively. In addition, the dynamic range DR and the minimum value MIN are supplied to the local decoders 241 to 244. The distortion detecting circuit 208 has input terminals 212, 213, 214 and 215 to which the above decoding representative values are respectively supplied and output terminals 217, 218, 219 and 220 to which the output signals $\alpha 0$ to $\alpha 3$ are extracted.

The inner space change detecting circuit 209 is the second arithmetic operating circuit for calculating a spatial first change amount $\Delta r$ from the true value of the objective pixel and the true value of a peripheral pixel which spatially locates in the periphery, for calculating spatial second change amounts $\Delta 0$, $\Delta 1$, $\Delta 2$ and $\Delta 3$ from the decoding value of the digitisation code of the peripheral pixel and the decoding representative values, and for calculating differences $\beta 0$, $\beta 1$, $\beta 2$ and $\beta 3$ between the first change amount $\Delta r$ and the second change amounts $\Delta 0$ to $\Delta 3$. The inner space change detecting circuit 209 has input terminals 222, 223, 224 and 225 to which the above decoding representative values are respectively supplied, an input terminal 226 to which the decoded value of the digitisation code DT is supplied, and output terminals 227, 228, 229 and 230 to which the differences $\beta 0$ to $\beta 3$ are extracted.

The decoded value of the digitisation code DT is formed by a local decoder 257. The dynamic range DR, the minimum value MIN, and the digitisation code DT are supplied to the local decoder 257 and the level corresponding to the digitisation code Dt is reconstructed by the decoding of the ADRC. The local decoders 241, 244 and 257 comprise ROMs to which the dynamic range DR and digitisation code are supplied as addresses. The minimum value MIN is added to the data read out of the ROMs.

The time dependent change detecting circuit 210 is the third arithmetic operating circuit for calculating a time dependent third change amount $\Delta t$ from the true value of the objective pixel and a true value of a reference pixel which is time precedent to the objective pixel and spatially corresponds thereto, for calculating time dependent fourth change amounts $\Delta 00$, $\Delta 01$, $\Delta 02$ and $\Delta 03$

from the decoded value of the digitisation code of the reference pixel and the decoding representative values, and for calculating differences r0, r1, r2 and r3 between the third change amount $\Delta t$ and the fourth change amounts $\Delta 00$ to $\Delta 03$. The time dependent change detecting circuit 220 has input terminals 232, 233, 234 and 235 to which the above decoding representative values are respectively supplied, an input terminal 236 to which the decoded value of the digitisation code is supplied, and output terminals 237, 238, 239 and 240 to which the output signals r0 to r3 are extracted.

Respective output signals of the distortion detecting circuit 208, inner space change detecting circuit 209, and time dependent change detecting circuit 210 are synthesised by weighting adding circuits 251, 252, 253 and 254. That is, the differential signals with respect to each of the four decoding representative values are weighted and added.

Assuming that w0, w1, w2 and w3 denote weighting coefficients, the weighting adding circuit 251 generates a synthesised output $\delta 0$ which is expressed as follows.

$$w0\alpha 0 + w1\beta 0 + w2r0 = \delta 0$$

In a manner similar to the above, the weighting adding circuits 252, 253 and 254 generate synthesised outputs $\delta 1$, $\delta 2$ and $\delta 3$ which are expressed as follows.

$$w0\alpha 1 + w1\beta 1 + w2r1 = \delta 1$$
$$w0\alpha 2 + w1\beta 2 + w2r2 = \delta 2$$
$$w0\alpha 3 + w1\beta 3 + w2r3 = \delta 3$$

Fixed values or variable values may be used as the weighting coefficients w0 to w2 and they are set in consideration of the characteristics of the input image or the like.

The synthesised outputs $\delta 1$ to $\delta 3$ from the weighting adding circuits 251 to 254 are supplied to a minimum value detecting circuit 255. The minimum value detecting circuit 255 generates a detection signal indicative of the minimum one of the synthesised outputs $\delta 1$ to $\delta 3$. The detection signal is supplied to a code selecting circuit 256. The digitisation code DT of two bits which is specified by the detection signal is generated from the code selecting circuit 256. The digitisation code DT is transmitted through the frame segmentation circuit 205. That is, in the code selecting circuit 256, one of the two-bit digitisation codes (00), (01), (10) and (11) corresponding to the decoding representative levels l0, l1, l2 and l3 is selected.

The selecting operation of the code selecting circuit 256 is as follows.

When $\delta 0$ is minimum, (00) is selected as the digitisation code DT.

When $\delta 1$ is minimum, (01) is selected as the digitisation code DT.

When $\delta 2$ is minimum, (10) is selected as the digitisation code DT.

When $\delta 3$ is minimum, (11) is selected as the digitisation code DT.

Although not shown, on the reception side, the reception data is supplied to a frame desegmentation circuit and the dynamic range DR, the minimum value MIN, and the digitisation code DT are separated by the frame desegmentation circuit. The dynamic range DR and the digitisation code DT are supplied to the ROMs. The decoding level after the minimum value was eliminated is formed. The minimum value MIN is added to the decoding level. Further, the reconstruction levels obtained as the results of the addition are changed to the original scanning order by a block separating circuit.

As shown in figure 9, the distortion detecting circuit 208 comprises subtracting circuits 261, 262, 263 and 264. The true value x1 of the objective pixel is commonly supplied from the input terminal 211 to the subtracting circuits 261 to 264, respectively. On the other hand, the decoding representative levels (MIN + I0), (MIN + I1), (MIN + I2) and (MIN __ I3) are supplied from the input terminals 212 to 215 to the subtracting circuits 261 to 264, respectively. Therefore, the following output signals $\alpha 0$ to $\alpha 3$ are obtained at the output terminals 217 to 220 of the subtracting circuits 261 to 264, respectively.

$$\alpha 0 = (I0 + MIN) - x1$$
$$\alpha 1 = (I1 + MIN) - x1$$
$$\alpha 2 = (I2 + MIN) - x1$$
$$\alpha 3 = (I3 + MIN) - x1$$

The output signals $\alpha 0$ to $\alpha 3$ of the above distortion detecting circuit 208 indicate the differences between the true value x1 of the objective pixel and the decoding representative levels. The two-bit digitisation code corresponding to the minimum one of the $\alpha 0$ to $\alpha 3$ expresses x1 by the minimum distortion (the S/N ratio is best).

The inner space change detecting circuit 209 has a construction corresponding to that shown in figure 4. Similarly the construction of the time dependent change detecting circuit 210 corresponds to that shown in figure 7. Therefore, the detailed description of these circuits 209 and 210 is omitted, respectively.

The third embodiment is adapted to the characteristics such as pattern, movement amount, and the like of the original image signal and the S/N ratio can be improved. The spatial change or time dependent change of the original image signal can be preserved, so that the generation of visually conspicuous noises in the reconstructed image can be prevented.

## Claims

1. A coding apparatus for coding a plurality of digital, original data elements corresponding to respective picture elements and each comprising n bits, comprising an encoder for encoding said original data elements into respective compressed data elements, each compressed data element having a number of bits less than n, and a decoder (32) for decoding said compressed data elements to one decoded value of a set of possible decoded values, wherein said encoder comprises:

   - first difference determining means (11) for determining a first difference between the value of a first original data element and the value of a second original data element which has already been encoded by said encoder and which corresponds to a picture element that is spatially adjacent to the picture element of said first original data element;

   - second difference determining means (20-23) for determining a first set of differences, each taken between the one of said set of possible decoded values and the decoded value of said second compressed data element;

   - generating means (14-19) for generating the first compressed data element such that if it were to be decoded then the decoded value provided from said set of possible decoded values would correspond to the difference from said set of differences which is closest to said first difference.

2. A coding apparatus according to claim 1, wherein said generating means includes third difference determining means (14-17) for determining a second set of differences each taken between one of said first mentioned set of differences and said first difference and minimum determining means (18) for determining which of said second set of differences is smallest wherein said first compressed data element is selected such that if it were to be decoded then the decoded value would correspond to the difference from said first set of differences which corresponds to the smallest difference from said second set of differences.

3. A coding apparatus according to claim 1 or 2, wherein said data elements are in the form of blocks of data elements each representing a plurality of picture elements.

4. A coding apparatus according to claim 3, wherein said decoder includes first and second detecting means (3) for detecting maximum and minimum values, respectively, of the data elements corresponding to the plurality of picture elements in each of said blocks, means (4) for generating dynamic range information for each said block from said maximum and minimum values for the respective block, table means supplied with said second compressed data element and said dynamic range information for generating code data, and adder means for adding said code data and said minimum value to generate said second decoded value.

5. A coding apparatus for coding a plurality of digital, original data elements corresponding to respective picture elements and each comprising n bits, comprising an encoder for encoding said original data elements into respective compressed data elements, each compressed data element having a number of bits less than n, and a decoder (128) for decoding said compressed data elements to one decoded value of a set of possible decoded values, wherein said encoder comprises:
   - first difference determining means (109) for determining a first difference between the value of a first original data element and the value of a second original data element which has already been encoded by said encoder and which corresponds to a picture element that is time-adjacent and spatially identical to the picture element of said first original data element;
   - second difference determining means (116-119) for determining a set of differences, each taken between the one of said set of possible decoded values and the decoded value of said second compressed data element;
   - generating means (110-115) for generating the first compressed data element where said first compressed data element is selected such that if said first compressed data element were to be decoded then the decoded value provided from said set of possible decoded values would correspond to the difference from said set of differences which is closest to said first difference.

6. A coding apparatus for coding a plurality of digital, original data elements corresponding to respective picture elements and each comprising n bits, comprising an encoder for encoding said original data elements into respective compressed data elements, each compressed data element having a number of bits less than n, and a decoder (257) for decoding said compressed data elements to one decoded value of a set of possible decoded values, wherein said encoder comprises:
   - first difference determining means (209) for determining a first difference between the value of a first original data element and the value of a second original data element which has already been encoded by said encoder and which corresponds to a picture element that is spatially adjacent to the picture element of said first original data element;
   - second difference determining means (210) for determining a second difference between the value of said first original data element and a third original data element which has already been encoded by said encoder and which corresponds to a picture element which is time-adjacent and spatially identical to the picture element of said first original data element;
   - third difference determining means (209) for determining a first set of differences, each taken between the one of said set of possible decoded values and the decoded value of said second compressed data element;
   - fourth difference determining means (210) for determining a second set of differences between one of said set of possible decoded values and the decoded value of said third compressed data element;
   - fifth difference determining means (209) for determining a third set of differences each between one of said first set of differences and said first difference;
   - sixth difference determining means (210) for determining a fourth set of differences between one of said second set of differences of said second difference;
   - seventh difference determining means (208) for determining a fifth set of differences each between one of said set of possible decoded values and said value of said first original data element;
   - weighting and adding means (251-4) for multiplying first, second and third, predetermined weighting coefficients by each of the differences of said third, fourth and fifth sets of differences respectively and for adding together the multiplied differences from each of said third, fourth and fifth sets of differences which corresponds to the same decoded value from said set of possible decoded values to generate a set of added values;
- minimum determining means (255) for determining which of said sets of added values is the smallest;
- generating means (256) for generating the first compressed data element such that if it were to be decoded then the decoded value provided from said set of possible values would correspond to the smallest added value from said set of added values.

7. A coding apparatus for coding a plurality of digital, original data elements corresponding to respective picture elements and each comprising n bits, comprising an encoder for encoding said original data elements into respective compressed data elements, each compressed data elements having a number of bits less than n, and a decoder (32) for decoding compressed data elements to provide a decoded value from a set of possible decoded values, wherein said encoding means comprises:
- first determining means for determining a first linear combination of the value of a first original data element with the value of a plurality of original data elements which have already been encoded by said encoder and which correspond to respective picture elements that are spatially adjacent to the picture element of said first original data element in the horizontal, vertical or diagonal directions;
- second determining means for determining a set of linear combinations, each being the linear combination of one of said set of possible decoded values with the decoded value of said plurality of compressed data elements, in which the linear coefficient of said one of said set of possible decoded values is the same as the linear coefficient of said value of said first original data element in said first linear combination and in which the linear coefficients of said decoded values of said plurality of compressed data elements are the same as the linear coefficients of the respective original data element of said plurality of original data elements in said first linear combination;

- generating means (14-19) for generating the first compressed data element such that if it were to be decoded then the decoded value provided from said set of possible decoded values would correspond to the difference from said set which is closest to said first linear combination.

**Patentansprüche**

1. Codiervorrichtung zur Codierung einer Vielzahl von digitalen Originaldatenelementen, die jeweiligen Bildelementen entsprechen und von denen jedes n Bits umfaßt, welche einen Codierer zur Codierung der Originaldatenelemente in jeweilige komprimierte Datenelemente, wobei jedes komprimierte Datenelement eine Anzahl von Bits besitzt, die kleiner als n ist, und einen Decoder (32) zur Decodierung der komprimierten Datenelemente in einen decodierten Wert aus einem Satz von möglichen decodierten Werten, umfaßt, bei welcher der Codierer umfaßt:
- erste Differenzbestimmungsmittel (11) zur Bestimmung einer ersten Differenz zwischen dem Wert eines ersten Originaldatenelements und dem Wert eines zweiten Originaldatenelements, welches bereits durch den Codierer codiert worden ist und welches einem Bildelement entspricht, das dem Bildelement des ersten Originaldatenelements räumlich benachbart ist;
- zweite Differenzbestimmungsmittel (20-23) zur Bestimmung eines ersten Satzes von Differenzen, von denen jede zwischen einer einzigen des Satzes von möglichen decodierten Werten und dem decodierten Wert des zweiten komprimierten Datenelements gebildet wird;
- Erzeugungsmittel (14-19) zur Erzeugung des ersten komprimierten Datenelements derart, daß, wenn es zu decodieren wäre, dann der decodierte Wert, welcher von dem Satz von möglichen decodierten Werten bereitgestellt wird, der Differenz aus dem Satz von Differenzen entsprechen würde, welche der ersten Differenz am nächsten liegt.

2. Codiervorrichtung nach Anspruch 1, bei der die Erzeugungsmittel dritte Differenzbestimmungsmittel (14-17) zur Bestimmung eines zweiten Satzes von Differenzen, von denen jede zwischen einer einzigen des ersten erwähnten Satzes von Differenzen und der ersten Differenz gebildet wird, und Minimum-Bestimmungsmittel (18) zur Bestimmung, welche des zweiten Satzes von Differenzen die kleinste ist, enthält, bei welcher das erste komprimierte Datenelement derart ausgewählt wird, daß, wenn es zu decodieren wäre, dann der decodierte Wert der Differenz aus dem ersten Satz von Differenzen entsprechen würde, welche der kleinsten Differenz aus dem zweiten Satz von Differenzen entspricht.

3. Codiervorrichtung nach Anspruch 1 oder 2, bei der die Datenelemente in der Form von Blöcken von Datenelementen vorliegen, von denen jeder eine Vielzahl von Bildelementen darstellt.

4. Codiervorrichtung nach Anspruch 3, bei der der Decoder jeweils erste und zweite Detektionsmittel (3) zur Feststellung von Maximal- und Minimalwerten der Datenelemente, welche der Vielzahl von Bildelementen in jedem der Blöcke entsprechen, Mittel (4) zur Erzeugung einer Aussteuerbereichsinformation für jeden Block aus den Maximal- und Minimalwerten für den jeweiligen Block, Tabellenmittel, welche mit dem zweiten komprimierten Datenelement und der Aussteuerbereichsinformation zur Erzeugung der Codedaten gespeist werden, und Additionsmittel zur Addition der Codedaten und des Minimalwertes, um den zweiten decodierten Wert zu erzeugen, enthält.

5. Codiervorrichtung zur Codierung einer Vielzahl von digitalen Originaldatenelementen, die jeweiligen Bildelementen entsprechen und von denen jedes n Bits umfaßt, welche einen Codierer zur Codierung der Originaldatenelemente in jeweilige komprimierte Datenelemente, wobei jedes komprimierte Datenelement eine Anzahl von Bits besitzt, die kleiner als n ist, und einen Decoder (128) zur Decodierung der komprimierten Datenelemente in einen decodierten Wert aus einem Satz von möglichen decodierten Werten, umfaßt, bei welcher der Codierer umfaßt:
   - erste Differenzbestimmungsmittel (109) zur Bestimmung einer ersten Differenz zwischen dem Wert eines ersten Originaldatenelements und dem Wert eines zweiten Originaldatenelements, welches bereits durch den Codierer codiert worden ist und welches einem Bildelement entspricht, das dem Bildelement des ersten Originaldatenelements zeitlich benachbart und mit ihm räumlich identisch ist;
   - zweite Differenzbestimmungsmittel (116-119) zur Bestimmung eines Satzes von Differenzen, von denen jede zwischen einer einzigen des Satzes von möglichen decodierten Werten und dem decodierten Wert des zweiten komprimierten Datenelements gebildet wird;
   - Erzeugungsmittel (110-115) zur Erzeugung des ersten komprimierten Datenelements, wobei das erste komprimierte Datenelement derart ausgewählt wird, daß, wenn das erste komprimierte Datenelement zu decodieren wäre, dann der decodierte Wert, welcher aus dem Satz der möglichen decodierten Werte bereitgestellt wird, der Differenz aus dem Satz der Differenzen entsprechen würde, welche der ersten Differenz am nächsten liegt.

6. Codiervorrichtung zur Codierung einer Vielzahl von digitalen Originaldatenelementen, die jeweiligen Bildelementen entsprechen und von denen jedes n Bits umfaßt, welche einen Codierer zur Codierung der Originaldatenelemente in jeweilige komprimierte Datenelemente, wobei jedes komprimierte Datenelement eine Anzahl von Bits besitzt, die kleiner als n ist, und einen Decoder (257) zur Decodierung der komprimierten Datenelemente in einen decodierten Wert aus einem Satz von möglichen decodierten Werten, umfaßt, bei welcher der Codierer umfaßt:
   - erste Differenzbestimmungsmittel (210) zur Bestimmung einer ersten Differenz zwischen dem Wert eines ersten Originaldatenelements und dem Wert eines zweiten Originaldatenelements, welches bereits durch den Codierer codiert worden ist und welches einem Bildelement entspricht, das dem Bildelement des ersten Originaldatenelements räumlich benachbart ist;
   - zweite Differenzbestimmungsmittel (210) zur Bestimmung einer zweiten Differenz zwischen dem Wert des ersten Originaldatenelements und einem dritten Originaldatenelement, welches bereits durch den Codierer codiert worden ist und welches einem Bildelement entspricht, das dem Bildelement des ersten Originaldatenelements zeitlich benachbart und räumlich mit diesem identisch ist;
   - dritte Differenzbestimmungsmittel (209) zur Bestimmung eines ersten Satzes von Differenzen, von denen jede zwischen einem einzigen des Satzes von möglichen decodierten Werten und dem decodierten Wert des zweiten komprimierten Datenelements gebildet wird;

- vierte Differenzbestimmungsmittel (210) zur Bestimmung eines zweiten Satzes von Differenzen zwischen einem einzigen des Satzes von möglichen decodierten Werten und dem decodierten Wert des dritten komprimierten Datenelements;
- fünfte Differenzbestimmungsmittel 209) zur Bestimmung eines dritten Satzes von Differenzen zwischen einer einzigen des ersten Satzes von Differenzen und der ersten Differenz;
- sechste Differenzbestimmungsmittel (210) zur Bestimmung eines vierten Satzes von Differenzen zwischen einer einzigen des zweiten Satzes von Differenzen und der zweiten Differenz;
- siebte Differenzbestimmungsmittel (208) zur Bestimmung eines fünften Satzes von Differenzen zwischen einem einzigen des Satzes von möglichen decodierten Werten und dem Wert des ersten Originaldatenelements;
- Gewichtungs- und Additionsmittel (251-4) zur Multiplikation erster, zweiter und dritter vorgegebener Gewichtungskoeffizienten mit jeweils jeder der Differenzen von dritten, vierten und sechsten Sätzen von Differenzen und zur gemeinsamen Addition der multiplizierten Differenzen aus jedem der dritten, vierten und fünften Sätze von Differenzen, welche dem gleichen decodierten Wert aus dem Satz der möglichen decodierten Werte entsprechen, um einen Satz von addierten Werten zu erzeugen;
- Minimum-Bestimmungsmittel (255) zur Bestimmung, welcher der Sätze von addierten Werten der kleinste ist;
- Erzeugungsmittel (256) zur Erzeugung des ersten komprimierten Datenelements, derart, daß, wenn es zu decodieren wäre, dann der aus dem Satz von möglichen Werten bereitgestellte decodierte Wert dem kleinsten addierten Wert aus dem Satz der addierten Werte entsprechen würde.

7. Codiervorrichtung zur Codierung einer Vielzahl von digitalen Originaldatenelementen, die jeweiligen Bildelementen entsprechen und von denen jedes n Bits umfaßt, welche einen Codierer zur Codierung der Originaldatenelemente in jeweilige komprimierte Datenelemente, wobei jedes komprimierte Datenelement eine Anzahl von Bits besitzt, die kleiner als n ist, und einen Decoder (32) zur Decodierung komprimierter Datenelemente, um einen decodierten Wert aus einem Satz von möglichen decodierten Werten bereitzustellen, bei welcher die Codierungsmittel umfassen:
- erste Bestimmungsmittel zur Bestimmung einer ersten linearen Kombination des Wertes eines ersten Originaldatenelements mit dem Wert einer Vielzahl von Originaldatenelementen, welche bereits durch den Codierer codiert worden sind und welche jeweiligen Bildelementen entsprechen, welche dem Bildelement des ersten Originaldatendatenelements in horizontaler, vertikaler oder diagonaler Richtung räumlich benachbart sind;
- zweite Bestimmungsmittel zur Bestimmung eines Satzes von linearen Kombinationen, wobei jede die lineare Kombination eines einzigen des Satzes von möglichen decodierten Werten mit dem decodierten Wert der Vielzahl von komprimierten Datenelementen ist, bei welchen der lineare Koeffizient eines einzigen des Satzes von möglichen decodierten Werten der gleiche wie der lineare Koeffizient des Wertes des ersten Originaldatenelements in der ersten linearen Kombination ist, und bei welchen die linearen Koeffizienten der decodierten Werte der Vielzahl von komprimierten Datenelementen die gleichen wie die linearen Koeffizienten des jeweiligen Originaldatenelements der Vielzahl von Originaldatenelementen in der ersten linearen Kombination sind;
- Erzeugungsmittel (14-19) zur Erzeugung des ersten Datenelements, derart, daß, wenn es zu decodieren wäre, dann der aus dem Satz von möglichen decodierten Werten bereitgestellte Wert der Differenz aus dem Satz entsprechen würde, welche der ersten linearen Kombination am nächsten liegt.

**Revendications**

1. Appareil de codage pour coder une pluralité d'éléments originaux de données numériques correspondant aux éléments d'image respectifs et chacun comprenant n bits, comprenant un codeur pour coder lesdits éléments originaux de données en éléments de données compressées respectifs, chaque élément de données compressées ayant un nombre de bits inférieur à n, et un décodeur (32) pour décoder lesdits éléments de données compressées à une valeur décodée d'un jeu de valeurs décodées possibles, dans lequel ledit codeur comprend :

- un premier dispositif de détermination de différence (11) pour déterminer une première différence entre la valeur d'un premier élément de données original et la valeur d'un second élément de données original qui a déjà été codé par ledit codeur et qui correspond à un élément d'image qui est spatialement adjacent à l'élément d'image dudit premier élément de données original ;
- un second dispositif de détermination de différence (20 à 23) pour déterminer un premier jeu de différences, prise chacune entre celle dudit jeu de valeurs décodées possibles et la valeur décodée dudit second élément de données compressées ;
- un dispositif de génération (14 à 19) pour générer le premier élément de données compressées de sorte que s'il était décodé alors la valeur décodée fournie par ledit jeu de valeurs décodées possibles correspondrait à la différence dudit jeu de différences qui est le plus proche de ladite première différence.

2. Appareil de codage salon la revendication 1, dans lequel ledit dispositif de génération comprend un troisième dispositif de détermination de différence (14 à 17) pour déterminer un second jeu de différences chacune prise entre celle dudit premier jeu mentionné de différences et ladite première différence et un dispositif de détermination de minimum (18) pour déterminer lequel dudit second jeu de différences est le plus petit dans lequel ledit premier élément de données compressées est sélectionné de sorte que s'il était décodé alors la valeur décodée correspondrait à la différence dudit premier jeu de différences qui correspond à la plus petite différence dudit second jeu de différences.

3. Appareil de codage selon la revendication 1 ou 2 dans lequel, lesdits éléments de donnés sont sous la forme de blocs d'éléments de données représentant chacun une pluralité d'éléments d'image.

4. Appareil de codage selon la revendication 3, dans lequel ledit décodeur comprend des premier et second dispositifs de détection (3) pour détecter respectivement des valeurs maximum et minimum, des éléments de données correspondant à la pluralité d'éléments d'image dans chacun desdits blocs, un dispositif (4) pour générer une information dynamique pour chacun desdits blocs desdites valeurs maximum et minimum pour le bloc respectif, un dispositif de table fourni avec ledit second élément de données compressées et ladite information dynamique pour générer des données de code, et un dispositif additionneur pour ajouter lesdites données de code et ladite valeur minimum pour générer ladite seconde valeur décodée.

5. Appareil de codage pour coder une pluralité d'éléments originaux de données numériques correspondant à des éléments d'image respectifs et chacun comprenant n bits, comprenant un codeur pour coder lesdits éléments originaux de données en éléments de données compressées respectifs, chaque élément de données compressées ayant un nombre de bits inférieur à n, et un décodeur (128) pour décoder lesdits éléments de données compressées à une valeur décodée d'un jeu de valeurs décodées possibles, dans lequel ledit codeur comprend :

- un premier dispositif de détermination de différence (109) pour déterminer une première différence entre la valeur d'un premier élément de données original et la valeur d'un second élément de données original qui a déjà été codé par ledit codeur et qui correspond à un élément d'image qui est identique spatialement et adjacent temporellement à l'élément d'image dudit premier élément de données original ;
- un second dispositif de détermination de différence (116 à 119) pour déterminer un jeu de différences, prise chacune entre celle dudit jeu de valeurs décodées possibles et la valeur décodée dudit second élément de données compressées ;
- un dispositif de génération (110 à 115) pour générer le premier élément de données compressées où ledit premier élément de données compressées est sélectionné de sorte que si ledit premier élément de données compressées était décodé alors la valeur décodée fournie par ledit jeu de valeurs décodées possibles correspondrait à la différence dudit jeu de différences qui est le plus proche de ladite première différence.

6. Appareil de codage pour coder une pluralité d'éléments originaux de données numériques correspondant à des éléments d'image respectifs et chacun comprenant n bits, comprenant un codeur pour coder lesdits éléments originaux de données en éléments de données compressées respectifs, chaque élément de données compressées ayant un nombre de bits inférieur à n, et un décodeur (257) pour décoder lesdits éléments de données compressées à une valeur décodée d'un jeu de valeurs décodées possibles, dans lequel ledit codeur comprend :

- un premier dispositif de détermination de différence (209) pour déterminer une première différence entre la valeur d'un premier élément de données original et la valeur d'un second élément de données original qui a déjà été codé par ledit codeur et qui correspond à un élément d'image qui est spatialement adjacent à l'élément d'image dudit premier élément de données original ;

- un second dispositif de détermination de différence (210) pour déterminer une seconde différence entre la valeur dudit premier élément de données original et un troisième élément de données original qui a déjà été codé par ledit codeur et qui correspond à un élément d'image qui est identique spatialement et adjacent temporellement à l'élément d'image dudit premier élément de données original ;

- un troisième dispositif de détermination de différence (209) pour déterminer un premier jeu de différences, chacune prise entre celle dudit jeu de valeurs décodées possibles et la valeur décodée dudit second élément de données compressées ;

- un quatrième dispositif de détermination de différence (210) pour déterminer un second jeu de différences entre celle dudit jeu de valeurs décodées possibles et la valeur décodée dudit troisième élément de données compressées ;

- un cinquième dispositif de détermination de différence (209) pour déterminer un troisième jeu de différences chacune entre celle dudit premier jeu de différences et ladite première différence ;

- un sixième dispositif de détermination de différence (210) pour déterminer un quatrième jeu de différences entre celle dudit second jeu de différences de ladite seconde différence ;

- un septième dispositif de détermination de différence (208) pour déterminer un cinquième jeu de différences chacune entre celle dudit jeu de valeurs décodées possibles et ladite valeur dudit premier élément de données original ;

- un dispositif d'addition et de pondération (251 à 4) pour multiplier des premier, second et troisième coefficients de pondération prédéterminés par chacune des différences desdits troisième, quatrième et cinquième jeux de différences respectivement et pour additionner ensemble les différences multipliées de chacun desdits troisième, quatrième et cinquième jeux de différences qui correspondent à la même valeur décodée dudit jeu de valeurs décodées possibles pour générer un jeu de valeurs additionnées.

- un dispositif de détermination de minimum (255) pour déterminer lequel desdits jeux de valeurs additionnées est le plus petit ;

- un dispositif de génération (256) pour générer le premier élément de données compressées de sorte que s'il était décodé alors la valeur décodée fournie par ledit jeu de valeurs possibles correspondrait à la valeur additionnée la plus petite dudit jeu de valeurs additionnées.

7. Appareil de codage pour coder une pluralité d'éléments originaux de données numériques correspondant aux éléments d'image respectifs et chacun comprenant n bits, comprenant un codeur pour coder lesdits éléments originaux de données en éléments de données compressées respectifs, chacun des éléments de données compressées ayant un nombre de bits inférieur à n, et un décodeur (32) pour décoder des éléments de données compressées pour fournir une valeur décodée par un jeu de valeurs décodées possibles dans lequel ledit dispositif de codage comprend :

- un premier dispositif de détermination pour déterminer une première combinaison linéaire de la valeur d'un premier élément de données original avec la valeur d'une pluralité d'éléments originaux de données qui ont déjà été codés par ledit codeur et qui correspondent aux éléments d'image respectifs qui sont spatialement adjacents à l'élément d'image dudit premier élément de données original dans les directions horizontale, verticale ou diagonale ;

- un second dispositif de détermination pour déterminer un jeu de combinaisons linéaires, chacune étant la combinaison linéaire de celle dudit jeu de valeurs décodées possibles avec la valeur décodée de ladite pluralité d'éléments de données compressées, dans laquelle le coefficient linéaire de celle dudit jeu de valeurs décodées possibles est le même que le coefficient linéaire de ladite valeur dudit premier élément de données original dans ladite première combinaison linéaire et dans laquelle les coefficients linéaires desdites valeurs décodées de ladite pluralité d'éléments de données compressées sont les mêmes que les coefficients linéaires de l'élément de données original respectif de ladite pluralité d'éléments originaux de données dans ladite première combinaison linéaire ;

- un dispositif de génération (14 à 19) pour générer le premier élément de données compressées de sorte que s'il était décodé alors la valeur décodée fournie par ledit jeu de valeurs décodées possibles correspondrait à la différence dudit jeu qui est le plus proche de ladite première combinaison linéaire ;

# Fig. 1

# Fig. 9

# Fig. 2

# Fig. 3

# Fig. 5

# Fig. 6

## Fig. 4A

# Fig.4B

# Fig. 7A

Fig. 7

| Fig. 7A | Fig. 7B |

# Fig. 7B

# Fig. 8A

Fig. 8

| Fig. 8 A | Fig. 8B |

# Fig. 8 B